Europäisches Patentamt

European Patent Office

Office européen des brevets

(11) Veröffentlichungsnummer: **0 352 225**
**A1**

## (12) EUROPÄISCHE PATENTANMELDUNG

(21) Anmeldenummer: **89810493.0**

(22) Anmeldetag: **29.06.89**

(51) Int. Cl.5: **A 01 G 13/10**

(30) Priorität: **22.07.88 CH 2804/88**

(43) Veröffentlichungstag der Anmeldung:
**24.01.90 Patentblatt 90/04**

(84) Benannte Vertragsstaaten:
**AT BE CH DE ES FR GB GR IT LI LU NL SE**

(71) Anmelder: **WERNER SCHENK AG.**
**Oberfeldstrasse 60**
**CH-3067 Boll (CH)**

(72) Erfinder: **Schenk, Werner**
**Oberfeldstrasse 60**
**CH-3067 Boll (CH)**

(54) **Umrandung für einen Pflanzplatz.**

(57) Die Umrandung setzt sich aus mehreren Wänden (1) zusammen, welche an dem oberen Ende (2) ein Randprofil aufweisen, an welches an der einen Stirnseite (6) ein stabförmiges Kupplungsteil (8) und an der anderen Stirnseite (7) ein sich über die Stirnseite (7) hinaus erstreckendes Verbindungsprofil (12) und ein Kupplungsteil (9) aufweist, in welch letzteres das Kupplungsteil (8) an der einen Stirnseite (6) einsteckbar ist. Das Verbindungsprofil (12) dient zur Abdeckung der Lücke im Randprofil (3), wenn zwei benachbarte Wände in abgewinkelter Lage verlegt werden. Damit die Wände (1) in einfacher Weise zu einer Umrandung zusammengesetzt werden können, werden die Kupplungsteile (8, 9) zu einer Kupplung (10) zusammengesteckt, wobei an der einen Stirnseite (6) das eine Kupplungsteil (8) mittels eines Filmscharniers (21) mit der Wand (1) verbunden ist.

Fig.1

Fig. 4

EP 0 352 225 A1

## Beschreibung

### Umrandung für einen Pflanzplatz

Die Erfindung betrifft eine Umrandung für einen Pflanzplatz, welche aus mindestens zwei im Boden eingesetzte Wände zusammengesetzt ist, an deren obern Ende ein von dem Pflanzplatz weg nach auswärts gerichtetes, konvex abgebogenes Randprofil angeformt ist, durch dessen Profilform Schnecken und andern Kreichtieren der Zugang zu dem Pflanzplatz versperrt wird.

Es ist bekannt, dass erhebliche Schäden an Pfanzenkulturen durch Schnecken und andere Weichtiere angerichtet werden. Damit diesen Schädlingen der Zugang zu den angebauten Pflanzen versperrt werden kann, werden zur Vernichtung derselben Chemikalien ausgestreut. Diese, die Umwelt belastende Methode wird jedoch je länger desto mehr kritisiert. Es hat deshalb nicht an Bestrebungen gefehlt, andere, weniger die Umwelt belastende Methoden einzuführen. Eine dieser Methoden besteht darin, den Schädlingen den Zugang zu den angebauten Pflanzen zu sperren. Hierzu ist es bekannt, den Pflanzplatz durch eine Umrandung zu schützen. Diese Umrandung besteht im wesentlichen aus Schutzwänden, die in besonderer Weise ausgebildet sind, dass den Schädlingen, insbesondere Schnecken und anderen Kriechtieren, der Zugang zu den angebauten Pflanzen verwehrt ist. Dies wird dadurch erreicht, dass um den zu schützenden Pflanzplatz Schutzwände in den Boden eingesetzt werden, deren im wesentlichen senkrechte Wand am oberen Ende durch ein Randprofil begrenzt ist, welches als vom Pflanzplatz weg nach auswärts gerichteter, konvex abgebogener Halbkreiszylinder ausgebildet ist (CH-PS 467 007). Das an der Aussenseite der Wand hochkriechende Getier gelangt zwar in den Innenteil des halkreiszylindrischen Randprofils, ist jedoch nicht in der Lage, die anschliessende, nach abwärts gerichtete Partie des Randprofils zu überschreiten. Damit erreicht, dass die Schädlinge ohne Belastung der Umwelt vom Eindrigen in den Pflanzplatz abgehalten werden. Bei der Vewendung solcher Schutzwände besteht das Problem darin, dass die Schädlinge nur dann abgewehrt werden können, wenn das nach auswärts gebogene halbzylinderförmige Randprofil durchgehend vorhanden ist. Werden jedoch Schutzwände verwendet, welche zu einem zusammenhängenden Wall ausgebildet werden, welcher den Pflanzplatz lückenlos umgeben sollen, ist es nicht zu vermeiden, dass bei zusammenstossenden, abgewinkelt angeordneten Wänden das Randprofil einen Unterbruch, d.h. eine Lücke, aufweist, durch welche die Schädlinge in den Pflanzplatz eindrigen können.

Die Erfindung betrifft ebenfalls eine Umrandung, welche durch Schutzwände zusammenstellbar ist, und es ist Aufgabe der Erfindung, die Umrandung der eingangs beschriebenen Art derart weiter auszugestalten, dass unabhängig von dem Winkel, unter welchem die einzelnen Wände abgewinkelt sind, das Randprofil vollständig erhalten bleibt, sodass an der Aussenseite der Wand hochkriechende Schädlinge zuverlässig von dem Zutritt zum Pflanzplatz abgehalten werden können.

Diese Aufgabe wird gemäss der Erfindung dadurch gelöst, dass zu dem Stoss zweier anstossender End- oder Stirnseiten der Wände im Bereich das Randprofils an einer dieser End- oder Stirnseiten der anstossenden Wände ein Verbindungsprofil befestigt ist, welches sich über diese End- oder Stirnseite der Wand hinaus erstreckt und bei abgewinkelter Aufstellung der Wände die hierbei zwischen den Randprofilen entstehende Lücke durch das dem Randprofil entsprechende Profil überbrückt wird. Dadurch wird erreicht, dass durch das Verbindungsprofil ein lückenlos zusammenhängendes Randprofil der gesamten Umrandung erreicht wird.

Zweckmässig weist das Randprofil die Form einer auf dem Kopf stehenden Rinne auf, bei welcher die Wand die eine Seitenwand bildet, an welcher ein horizontaler Steg anschliesst, der durch einen parallel zur Wand verlaufenden, gegen den Boden gerichteten Flansch begrenzt ist, wobei das Verbindungsprofil als Winkel geformt ist, von welchem der eine Schenkel parallel zum horizontalen Steg verläuft, jedoch um dessen Wandstärke nach abwärts versetzt und der andere Schenkel parallel zum Flansch, jedoch um dessen Wandstärke nach innen versetzt angeordnet ist, wobei der andere Schenkel kreisförmig abgebogen und sich angenähert über einen Viertelkreis erstreckt. Damit wird erreicht, dass zwei anstossende Wände von ihrer fluchtenden Lage, d.h. innerhalb einer von 189° bis zu annähernd 90° abgewinkelten Lage eingesetzt werden können, ohne dass eine Lücke im Randprofil entsteht.

Die Erfindung ist in der Zeichnung in einem Ausführungsbeispiel dargestellt und nachfolgend beschrieben. Es zeigen:

Fig. 1 Eine Seitenansicht einer Schutzwand zur Bildung einer Umrandung für einen gegen Schädlinge zu schützenden Pflanzplatz,

Fig. 2 eine Draufsicht der Schutzwand nach Fig. 1,

Fig. 3 einen senkrechten Schnitt der Schutzwand längs der Linie III-III in Fig. 1 und

Fig. 4 einen Horizontalschnitt der ineinander steckbaren, stabförmigen Kupplungsteile zu einer Kupplung mit einem Filmscharnier zur Verbindung der End- oder Stirnseiten zweier benachbarter Wände.

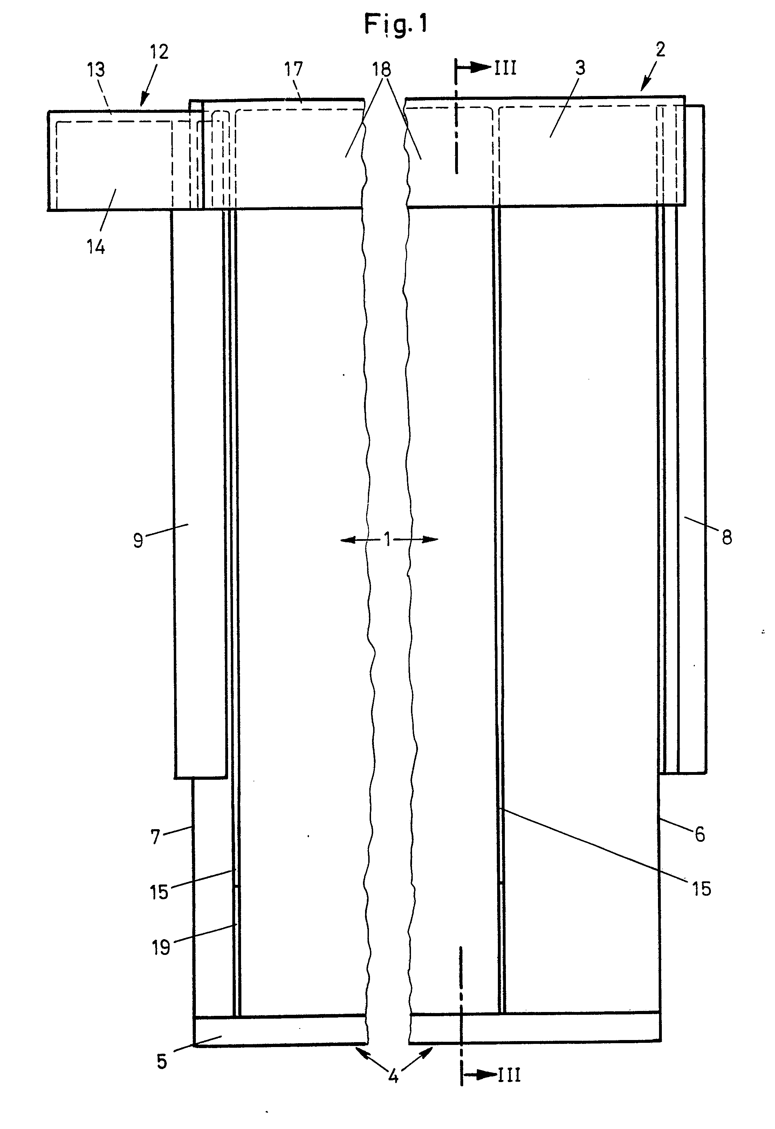

In Fig. 1 ist eine Wand 1 dargestellt, welche für die Erstellung einer Umrandung für einen Pflanzplatz verwendet werden kann. Die Wand 1 zeigt ihre Aussenseite, wobei am oberen Ende 2 ein Randprofil 3 angeordnet ist, während das untere Ende 4 als Schneide 5 ausgebildet ist.

An der einen Stirnseite 6 der Wand 1 ist der innere Teil 8 einer ineinander steckbaren Kupplung 10 befestigt, während der äussere Teil 9 dieser Kupplung an der andern, gegenüber liegenden Stirnseite 7 befestigt ist. Der innere und der äussere Kupplungsteil 6, 7 erstrecken sich stab- oder rohrförmig vom obern Ende 2 bis gegen das untere Ende 4.

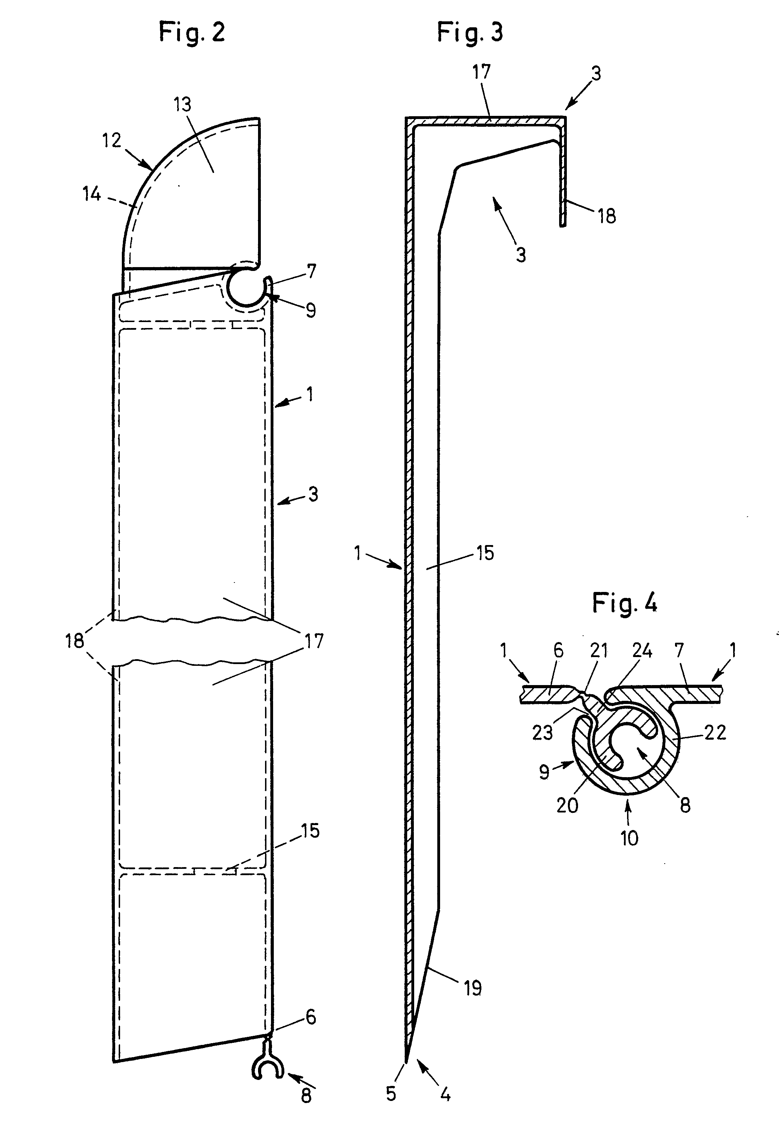

An der andern Stirnseite 7 der Wand 1 erstreckt sich das Randprofil 3 mittels eines Verbindungsprofils 12 über die andere Stirnseite 7 hinaus. Wie aus Fig. 1 ersichtlich ist, ist das Verbindungsprofil 12 um die Wandstärke des Randprofils 3 nach abwärts versetzt. Das Verbindungsprofil 12 ist als Winkel geformt, von welchem der eine Schenkel 13 horizontal und der andere Schenkel 14 vertikal verläuft wie noch anhand von Fig. 2 im Detail erläutert wird.

An der Aussenseite der Wand 1 sind Versteifungsstege 15 mit Abstand angeordnet. Die Stege 15 erstrecken sich am obern Ende 2 bis in das Randprofil 3, während sie an dem unteren Ende 4 angeschrägt sind und in die Schneide 5 übergehen, siehe Fig. 3.

Die in Fig. 3 dargestellte Draufsicht der Wand 1 lässt erkennen, dass das Randprofil 3 sich aus einem horizontalen Steg 17 und einem Flansch 18 zusammensetzt, welch letzterer auch aus Fig. 1 erkennbar ist. Der Steg 17 endet an den Stirnseiten 6, 7 verläuft jedoch nicht genau senkrecht zur Wand 1, sondern leicht angeschrägt, wodurch der Schwenkbereich zweier durch die Kupplung 10 miteinander verbundener Wände 1 etwas mehr als 90 ° zueinander geschwenkt werden können.

An der einen Stirnseite 6 ist die besondere Ausführungsform des inneren Kupplungsteils 8 erkennbar. Auf der gegenüberliegenden andern Stirnseite 7 ist der rohrförmige äussere Kupplungsteil 9 ebenfalls erkennbar.

Aus Fig. 2 ist weiter die Form des Verbindungsprofils 12 erkennbar. Der eine Schenkel 13 weist annähernd die Form eines Viertelkreissektors auf, während der andere Schenkel 14 sich annähernd über einen Viertelkreisbogen erstreckt. Wesentlich ist hierbei, dass sowohl der eine Schenkel 13, als auch der andere Schenkel 14 zwar gegenüber dem Steg 17 und dem parallel zur Wand 1 verlaufenden Flansch 18 zurückgesetzt sind, jedoch ohne Lücke in das Randprofil 13 übergehen. Durch die um die Wandstärke des Steges 17 und des Flansches 18 verkleinerten Dimensionen des Verbindungsprofils 12 kann das Verbindungsprofil 12 in das Randprofil 3 einer benachbarten, mit der Kupplung 10 verbundenen Wand 1 eingeführt werden. Es ist hierbei erkennbar, dass die benachbarte Wand 1 zur benachbarten Wand 1 von der fluchtenden Lage bis zu einem etwas grösseren Winkel als 90° angeordnet werden kann, ohne das zwischen den beiden Randprofilen 3 eine Lücke entsteht. Diese sonst beim Abwinkeln zweier Wände 1 entstehende Lücke wird durch das Verbindungsprofil 12 überbrückt.

Der in Fig. 3 dargestellt Vertikalschnitt der Wand 1 zeigt die Form der Stege 15 und die Form des Randprofils 3. Das Wandprofil 3 bildet eine auf dem Kopf stehende Rinne, die einerseits durch die Wand 1, den Steg 17 und den Flansch 18 gebildet wird. Die Versteifungsstege 15 erstrecken sich bis in das innere des Wandprofils 3. Es wäre auch möglich, für die Rinnenform den Flansch 8 nicht parallel, sondern etwas einwärts oder auswärts geneigt anzuordnen. Auch könnte der obere Teil der Wand 1 geneigt sein.

Aus Fig. 3 ist weiter die am unteren Ende 4 angeordnete Schneide 5 erkennbar, in welche das untere Ende des Versteifungsteges 15 mit einer Anschrägung 19 übergeht.

Aus Fig. 4 ist die Kupplung 10 im Schnitt dargestellt, die sich aus den beiden Kupplungsteilen 8, 9 zusammensetzt. Der innere Kupplungsteil 8 ist als halbzylinderförmige Gabel 20 ausgebildet, die mittels über einen Verbindungssteg 24 eines Filmscharniers 21 mit der einen Stirnseite 6 der einen Wand 1 verbunden ist. Der andere Kupplungsteil 9 ist als Rohr 22 aufgebildet, welches auf seiner ganzen Länge einen Schlitz 23 aufweist. Das Rohr 22 befindet sich an der andern Stirnseite 7 des benachbarten Rohrs 1. Zwei benachbarte Wände 1 werden mit Hilfe der Kupplung 10 so miteinander verbunden, dass die halbzylinderförmige Gabel 20 in das Rohr 22 gesteckt wird, wobei der Verbindungssteg 24 des Firmscharniers 21 in dem Längsschlitz 23 liegt. Es findet somit keine Schwenkbewegung zwischen den beiden Kupplungsteilen 8, 9, von etwas Spiel abgesehen, statt. Das Abwinkeln zweier miteinander verbundener Wände 1 erfolgt somit durch das Filmscharnier 21. Durch diese Anordnung wird erreicht, dass zwei benachbarte miteinander verbundene Wände 1 in einem grossen Bereich zueinander abgewinkelt aufgestellt werden können. Die Schneide 5 am unteren Ende 4 der Wand 1 erlaubt ein einfaches Einstecken der Wände 1 in den Boden.

Die Wände 1 können in verschiedener Weise ausgeführt sein. Die in den Figuren 1-4 dargestellte Ausführungsform geht von einer standardisierten Wand 1 aus, welche an der einen Stirnseite 6 das eine Kupplungsteil 8 aufweist, während an der anderen Stirnseite 7 das Verbindungsprofil 12 und das äussere Kupplungsteil 9 angeordnet sind. Solche Wände 1 können mit einer Einheitslänge ausgeführt werden. Bei Nichtgebrauch können die Wände 1 durch Trennen der Kupplungsteile zerlegt und auf einem verhältnismässig kleinen Raum gestapelt werden.

Es ist aber auch möglich, Kupplungsstücke herzustellen, d.h. zwei Teile, die aus einem Wandteil 1 bestehen, von denen das eine Wandteil an der Stirnseite 6 das eine Kupplungsteil 8 aufweist, während das andere Wandteil 1 an der anderen Stirnseite 7 das andere Kupplungsteil 9 und das Verbindungsprofil 12 aufweist. Es können an diese kurzen Wandteile 1 Wandteile mit glatter Stirnseite angeschweisst werden, z.B. mittels Spiegelschweissung, sodass damit beliebig lange Wände 1 hergestellt werden können.

Für die Wirksamkeit der beschriebenen Wände ist es wesentlich, dass sie mit einem Verbindungsprofil 12 ausgerüstet sind, sodass unabhängig von der gegenseitigen Lage der Wände ein lückenloses Randprofil besteht, damit Schnecken und anderen Kriechtieren der Zugang zum dahinter liegenden Pflanzplatz versperrt ist. Dagegen könnte anstelle des Filmscharniers 21 und er Kupplung 20 eine andere Verbindung, z.B. ein Scharnier gewöhnlicher Bauart, verwendet werden, jedoch wäre dann die Herstellung und das Zusammenstellen einer Umrandung mit grösserem Aufwand verbunden. Die Wände 1 können zweckmässig aus einem Kunststoff hergestellt sein, der gegenüber Witterungseinflüssen praktisch korrosionsfest ist, z.B. Polyethylen oder Plypropylen. Es wäre allerdings auch denkbar, die Wände 1 aus Leichtmetall oder aus einem Metallblech herzustellen.

## Patentansprüche

1. Umrandung für einen Pflanzplatz, welche aus mindestens zwei im Boden eingesetzten Wänden (1) zusammengesetzt ist, an deren oberem Ende (4) ein von dem Pflanzplatz weg nach auswärts gerichtetes, konvex abgebogenes Randprofil (3) angeformt ist, durch dessen Profilform Schnecken und anderen Kriechtieren der Zugang in den Pflanzplatz versperrt wird, dadurch gekennzeichnet, das zu dem Stoss zweier anstossender End-oder Stirnseiten (6, 7) der Wände (1) im Bereich des Randprofils (3) an einer dieser End- oder Stirnseiten (7) der anstossenden Wände ein Verbindungsprofil (12) befestigt ist, welches sich über diese End-oder Stirnsetie der Wand (1) hinaus erstreckt und bei abgewinkelter Aufstellung der Wände (1) die hierbei zwischen den Randprofilen (3) entstehende Lücke durch das dem Randprofil entsprechende Verbindungsprofil (12) überbrückt wird.

2. Umrandung nach Anspruch 1, dadurch gekennzeichnet, dass das Randprofil (3) die Form einer auf dem Kopf stehenden Rinne aufweist, bei welcher die Wand (1) die eine Seitenwand bildet, an welcher ein horizontaler Steg (17) anschliesst, der durch einen parallel zur Wand verlaufenden, gegen den Boden gerichteten Flansch (18) begrenzt ist, wobei das Verbindungsprofil (12) als Winkel geformt ist, von welchem der eine Schenkel (13) parallel zum Steg (17) verläuft, jedoch um dessen Wandstärke nach abwärts versetzt und der andere Schenkel (14) parallel zum Flansch (18),jedoch um dessen Wandstärke nach innen versetzt angeordnet ist, wobei der andere Schenkel (14) kreisförmig abgebogen ist und sich annähernd über einen Viertelkreis erstreckt.

3. Umrandung nach Anspruch 1 oder 2, daduch gekennzeichnet, dass zwei benachbarte Wände (1) an dem Stoss durch ein Scharnier (20, 21) miteinander verbunden sind.

4. Umrandung nach Anspruch 3, dadurch gekennzeichnet, dass das Scharnier ein Filmscharnier (21) ist, welches an der einen, von dem Verbindungsprofil (12) freien Stirnseite (6) der einen Wand (1) angeordnet ist und mit einem Kupplungsteil (8) einer ineinander steckbaren, stabförmigen Kupplung (20) versehen ist, mit welchem Kupplingsteil (8) ein an der anderen Wand (1) angeordnetes anderes Kupplungsteil (9) zu der ineinandersteckbaren, stabförmigen Kupplung (20) verbunden ist.

5. Umrandung nach Anspruch 4, dadurch gekennzeichnet, dass die Kupplung (20) mit ihrem andern Kupplungsteil (9) an dem Uebergang des Randprofils zum Verbindungsprofil (12) in der Nähe der andern End- oder Stirnseite (7) angeordnet und als mit einem Längsschlitz (23) versehenes Rohr (22) ausgebildet ist, in welchem der eine Kupplungsteil (8) einsteckbar ist.

6. Umrandung nach Anspruch 1, dadurch gekennzeichnet, dass die im Boden eingesetzte Wand (1) mit Abstand angeordnete senkrechte Versteifungsstege (15) aufweist, welche an dem andern Ende (4) der Wand (1) eine Anschrägung (19) aufweisen, die in eine, das untere Ende (4) der Wand (1) bildende Schneide (5) ausläuft.

7. Umrandung nach Anspruch 1, dadurch gekennzeichnet, dass die Wände (1) an der einen Stirnseite (6) mit dem Filmscharnier (21) und dem einen Kupplungsteil (8) und an der andern Stirnseite (7) mit dem Verbindungsprofil (12) und dem andern Kupplungsglied (9) versehen sind.

8. Umrandung nach Anspruch 1, dadurch gekennzeichnet, dass die Wände (1) an der einen Stirnseite einen glatten Rand aufweisen, während an der andern Stirnseite das Filmscharnier (21) und das eine Kupplungsteil (8) oder das Verbindungsprofil (12) und das andere Kupplungsteil (9) angeordnet sind.

## Fig.1

Fig. 2

Fig. 3

Fig. 4

# EUROPÄISCHER RECHERCHENBERICHT

Europäisches Patentamt

Nummer der Anmeldung

EP 89 81 0493

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-417724 (WILDING) <br> * Seite 2, Zeile 76 – Seite 3, Zeile 7; Figuren 1-6 * <br> --- | 1-7 | A01G13/10 |
| Y | US-A-4319423 (JUDO) <br> * Spalte 2, Zeile 56 – Spalte 4, Zeile 58; Figuren 1, 2 * <br> --- | 1, 2 | |
| Y | US-A-2782561 (SMITH) <br> * das ganze Dokument * <br> --- | 2 | |
| Y | DE-A-2945292 (HESS) <br> * Seite 11, Absatz 3 – Seite 15, letzter Absatz; Figuren 1-6 * <br> --- | 3-7 | |
| A | GB-A-24977AD1913 (HILEY) <br> * das ganze Dokument * <br> ----- | 1 | |

### RECHERCHIERTE SACHGEBIETE (Int. Cl.5)

A01G

Der vorliegende Recherchenbericht wurde für alle Patentansprüche erstellt

| Recherchenort | Abschlußdatum der Recherche | Prüfer |
|---|---|---|
| DEN HAAG | 31 OKTOBER 1989 | HERYGERS J.J. |